# FASCICULE DE BREVET EUROPEEN

(11) **EP 1 586 873 B1**
(45) Date de publication et mention de la délivrance du brevet: **22.11.2017**
(21) Numéro de dépôt: 05007172.9
(22) Date de dépôt: 01.04.2005
(51) Int. Cl.: G01F 23/30, H01H 36/00, H01R 13/627, B60T 17/22, F16B 5/06

(54) **Cartouche de détection de niveau de liquide dans un réservoir hydraulique, réservoir hydraulique et procédé de montage de la cartouche**
Patrone für Füllstandsmessung einer Flüssigkeit in einem Hydraulikbehälter, Hydraulikbehälter und Verfahren zur Montage der Patrone
Cartridge for level metering of a liquid in a hydraulic reservoir, hydraulic reservoir and method of mounting the cartridge

(30) Priorité: 13.04.2004 FR 0403901
(43) Date de publication de la demande: 19.10.2005
(73) Titulaire: ROBERT BOSCH GMBH, 70442 Stuttgart (DE)
(72) Inventeur: Justaman, Aurélien, 93190 Livry Gargan (FR); Lopez Da Cruz, Nicolas, 93600 Aulnay Sous Bois (FR); L'Aot, Jean-Michel, 93240 Stains (FR); Lenczner, Sylvain, 75020 Paris (FR); Beaure-D'Augeres, Olivier, 75020 Paris (FR)

(56) Documents cités:
- EP-A- 0 717 202
- EP-A- 1 081 395
- EP-A- 1 154 165
- US-A- 4 920 936
- US-A- 5 511 283

## Description

L'invention se rapporte à une cartouche de détection de niveau de liquide dans un réservoir hydraulique de véhicule automobile. Plus précisément, l'invention se rapporte à des moyens de maintien de la cartouche dans un logement spécifique ménagé dans le réservoir. L'invention se rapporte également à un procédé de montage d'une telle cartouche dans ledit logement. L'invention se rapporte également à un réservoir hydraulique muni d'une telle cartouche.

Un but de l'invention est de permettre un bon maintien d'une cartouche de détection dans un logement ménagé dans un réservoir hydraulique. Un autre but de l'invention est de faciliter un montage de la cartouche dans le logement, sans risque d'endommager la cartouche lors du montage ou d'un démontage. Un but supplémentaire de l'invention est d'augmenter une précision de la détection du niveau de liquide dans le réservoir par la cartouche.

Un véhicule automobile comporte plusieurs réservoirs hydrauliques, comme un réservoir de liquide de frein et un réservoir de carburant. Lors d'un fonctionnement du véhicule, une quantité de liquide dans ces réservoirs tend à diminuer. Par exemple, une quantité de liquide de frein peut diminuer dans le réservoir de liquide de frein du fait d'une fuite hydraulique à l'endroit d'un circuit de freinage ou du réservoir lui même.

Afin que la quantité de liquide de frein dans le réservoir soit toujours suffisante pour permettre un freinage satisfaisant, la législation impose aux constructeurs de prévoir des moyens pour informer un conducteur lorsque que le niveau de liquide dans le réservoir est inférieur à un niveau seuil préalablement fixé. Par exemple, un voyant lumineux s'allume sur un tableau de bord du véhicule lorsque le niveau de liquide dépasse ce seuil défini comme critique. L'allumage du voyant lumineux est par exemple commandé par un circuit électrique disposé à l'endroit du réservoir.

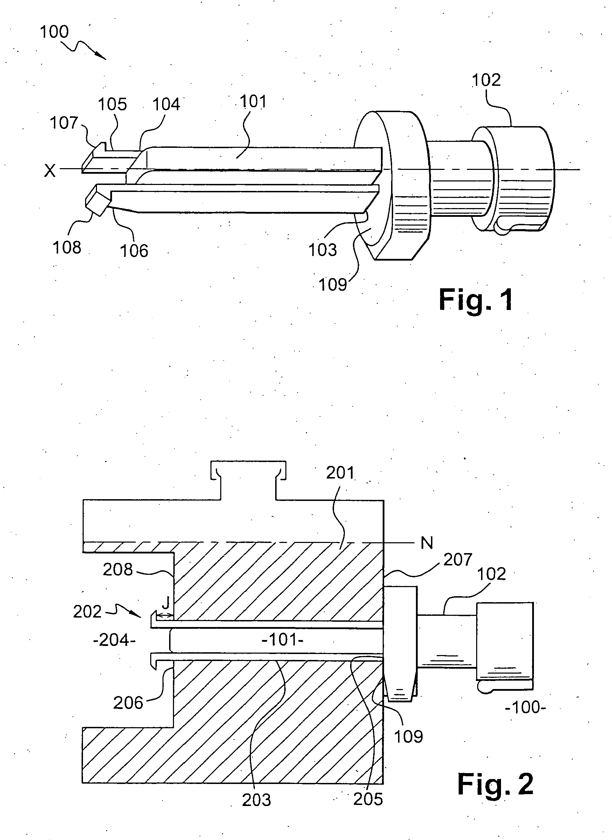

On connaît dans l'état de la technique, et tel que cela est représenté à la figure 1, une cartouche 100 de détection de niveau de liquide dans un réservoir. La cartouche 100 renferme par exemple un circuit électrique muni d'un interrupteur à lame souple (ILS).

Sur la figure 2, la cartouche 100 est disposée dans un logement 202 ménagé dans un réservoir 200. Le logement 202 comporte une première partie 203 ayant un contour interne suivant un contour externe d'une jupe 101 de la cartouche 100. La première partie 203 du logement 202 débouche par une extrémité externe 205 vers l'extérieur du réservoir 200, et par une extrémité interne 206 dans une deuxième partie 204 du logement 202.

La cartouche 100 comporte la jupe 101 et un connecteur 102. Le connecteur 102 est fixé par tous moyens à une première extrémité 103 de la jupe 101. Une deuxième extrémité 104 de la jupe 101 est munie de deux pattes 105 et 106, s'étendant parallèlement à un axe X de la jupe 101. Une extrémité libre de chacune des pattes 105 et 106 comporte un cran, respectivement 107 et 108. Les crans 107 et 108 s'étendent perpendiculairement à l'axe X, vers l'extérieur par rapport audit axe X.

Comme cela est représenté sur la figure 2, lorsque la jupe 101 est disposée dans la première partie 203 du logement 202, une face 109 du connecteur 102 fixée à la jupe 101 vient en butée contre un rebord d'appui externe 207 du réservoir 200, bordant l'extrémité externe 205 de la première partie 203 du logement 202. Les crans 107 et 108 viennent en butée contre un rebord d'appui interne 208 du réservoir 200, bordant l'extrémité interne 206 de la première partie 203 du logement 202. La jupe 101 est ainsi maintenue dans le logement 202 par ces deux butées, et par une paroi interne de la première partie 203 du logement 202.

Cependant, il existe un jeu de montage J entre les crans 107 et 108, et le rebord d'appui interne 208 du réservoir 200. Ce jeu J est nécessaire pour permettre un clipsage des pattes crantées 105 et 106. Ce jeu J est par contre préjudiciable au bon maintien de la cartouche 100 dans le logement 202. La cartouche 100 a en effet une liberté de déplacement axial dans le logement 202.

Ce déplacement axial peut être à l'origine de cliquetis pouvant incommoder ou inquiéter un conducteur.

Par ailleurs, une qualité de la détection du niveau N de liquide 201 dans le réservoir hydraulique 200 peut être diminuée du fait d'un ballottement de la cartouche 100 dans le logement 202.

De plus, lors de l'introduction de la jupe 101 dans la première partie 203 du logement 202, les crans 107 et 108 et donc les pattes 105 et 106 sont contraints par la paroi interne de la première partie 203 du logement 202. Cette contrainte peut déformer ou fragiliser les pattes 105 et 106. La qualité du maintien de la cartouche 100 peut s'en ressentir.

Par ailleurs, il est malaisé de retirer la cartouche 100 de son logement 202. En effet, les crans 107 et 108 opposent lors du retrait une résistance contre la paroi interne de la première partie 203 du logement 202. La cartouche 100 peut ainsi être détériorée et ne plus être réutilisable.

Un exemple d'une cartouche de détection de niveau de liquide est décrit dans le document US 4 920 936 A1. Des dispositifs de fixation au moyen de charnières sont décrits dans les documents EP 1 081 395 A1 et US 5 511 283 A1.

Dans l'invention, on cherche à résoudre les problèmes exposés dessus, en proposant un dispositif de détection très précis du niveau du liquide dans un réservoir hydraulique. Dans l'invention on cherche notamment à éliminer un jeu du dispositif de détection dans un logement du réservoir. On cherche également à faciliter un montage et un démontage du dispositif de détection dans son logement.

Le principe de l'invention repose sur un dispositif de maintien, formant butée, d'une tige cylindrique du dispositif de détection contre un rebord d'appui interne. Le rebord d'appui interne est formé par une paroi du réservoir, décrivant un logement ménagé dans le réservoir. Le dispositif de détection est disposé dans ce logement. La butée fait partie intégrante de la tige cylindrique. La partie formant butée a une position initiale permettant une introduction aisée de la tige cylindrique dans le logement. Une fois la tige cylindrique introduite dans le logement, le dispositif de maintien est amené et bloqué dans une position telle qu'il forme une butée rigide de la tige contre le rebord d'appui interne du logement.

Le dispositif de maintien de l'invention est muni de deux bras. Chaque bras peut se replier vers l'extérieur uniquement. Les deux bras sont solidaires par une extrémité de la tige cylindrique, et par une autre extrémité d'un socle. Une fois la tige cylindrique introduite dans le logement, le socle est remonté en direction de la tige cylindrique. Les bras se plient vers l'extérieur, formant par exemple deux ailettes rigides. On obtient ainsi une butée interne rigide.

La tige cylindrique est munie d'une seconde butée, opposée à la première. La seconde butée est par exemple formée par un boîtier dont une dimension est supérieure à une dimension du logement. Ainsi, une fois la tige cylindrique introduite dans le logement, le boîtier vient en butée externe contre un rebord d'appui externe. Le rebord d'appui externe est formé par une paroi externe du réservoir bordant une extrémité d'entrée du logement.

La tige cylindrique est maintenue dans le logement par les deux butées. Les bras de la butée interne sont repliés de manière à maintenir la tige cylindrique en traction. Les bras sont dans un état replié de contrainte, et tendent donc à se déplier. La butée externe est ainsi tirée contre le rebord d'appui externe. Tout risque de jeu de la jupe dans le logement est éliminé.

Les matériaux utilisés pour former la tige cylindrique, les bras et le socle, sont tels qu'une fois pliés les bras ne peuvent plus se déplier complètement. Ainsi, même si le socle s'éloigne plus ou moins de la tige cylindrique, les bras restent au moins partiellement repliés vers l'extérieur. La butée existe donc toujours, assurant ainsi un maintien de la tige cylindrique dans le logement.

Par ailleurs, le socle est muni d'un moyen permettant de maintenir le socle fixé sur la tige cylindrique. Les pattes relient le socle à la tige, une distance entre la tige et le socle pouvant varier selon un état de repliement des pattes. Quand les pattes sont totalement repliées, le socle vient au contact de l'extrémité de la tige portant les pattes. Le moyen permettant de maintenir le socle fixé sur la tige, ou moyen de fixation, est solidaire de l'extrémité de la tige portant les pattes. Ainsi, pour que le socle soit fixé sur la tige, il est nécessaire que les pattes soient entièrement repliées. Le moyen de fixation du socle à la tige permet donc d'assurer un maintien de l'état replié des pattes. Le moyen de fixation est tel qu'une solidarisation est facilitée. Une désolidarisation du socle et de la tige cylindrique, elle, peut être rendue difficile du fait d'une forme particulière du moyen de fixation.

L'invention a donc pour objet une cartouche de détection de niveau de liquide dans un réservoir selon la revendication 1. L'invention a également pour objet un réservoir de liquide hydraulique muni d'une cartouche de détection de l'invention, selon la revendication 8. L'invention a également pour objet un procédé de montage d'une cartouche de l'invention dans un logement partiellement traversant ménagé dans un réservoir, selon la revendication 9. L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une représentation d'une cartouche de détection de l'état de la technique, déjà décrite ;
- Figure 2 : une représentation de la cartouche de l'état de la technique dans un logement ménagé dans un réservoir hydraulique, déjà décrite ;
- Figures 3A et 3B : une représentation d'une cartouche de détection de l'invention, en position dépliée (3A) et pliée (3B) ;
- Figures 4A, 4B et 4C : une représentation d'un montage de la cartouche de l'invention dans un logement ménagé dans un réservoir hydraulique.
- Figure 5 : une représentation d'une cartouche de détection disposée dans un logement ménagé dans un réservoir, selon un exemple particulier de réalisation de l'invention.

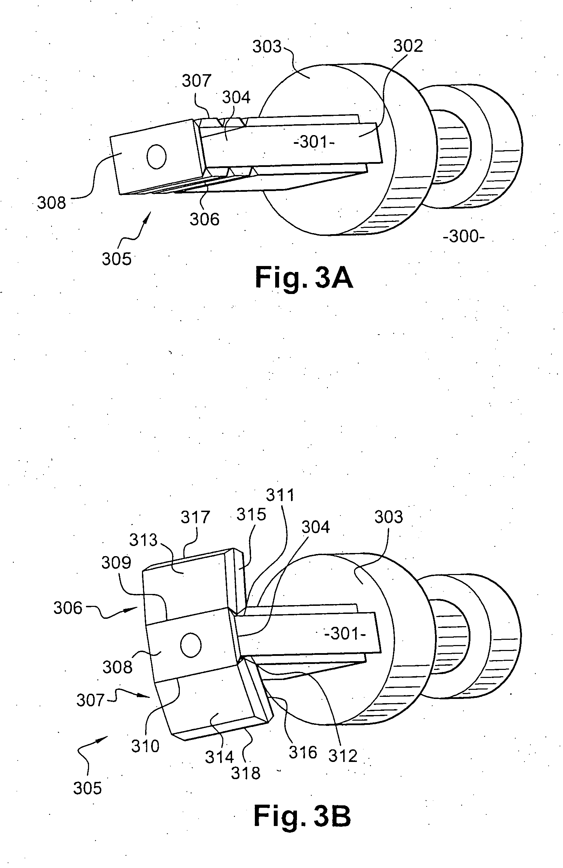

Sur la figure 3A, on peut voir une cartouche 300 selon un exemple de réalisation de l'invention. La cartouche 300 comporte une jupe 301. La jupe 301 est munie à une première extrémité 302 d'un élément 303 formant une première butée 303. La jupe 301 est munie à une deuxième extrémité 304 d'une deuxième butée 305.

Dans l'exemple représenté, la première butée 303 est formée par un boîtier. La deuxième butée 305 est formée, selon l'invention par des moyens pliables 306 et 307.

Sur la figure 3A, la cartouche 300 est en position repos. Par position repos, on entend position dans laquelle les moyens pliables 306 et 307 sont dans un état non contraint, c'est à dire déplié.

Sur la figure 3B, on peut voir la cartouche 300 dans une position contrainte. C'est à dire que les moyens pliables 306 et 307 sont pliés, afin de pouvoir former la deuxième butée 305.

Dans l'exemple de réalisation décrit ici, les moyens pliables 306 et 307 sont constitués de deux charnières 306 et 307.

Chaque charnière 306 ou 307 est fixée d'une part à un socle 308 par une extrémité basse 309 ou 310, et d'autre part à la deuxième extrémité 304 de la jupe 301 par une extrémité haute 311 ou 312. Chaque charnière 306 ou 307 comporte deux parties, respectivement partie haute 313 ou 314 et partie basse 315 ou 316. Une jonction 317 ou 318 entre la partie basse 315 ou 316 et la partie haute 313 ou 314 permet un écartement vers l'extérieur de chacune des charnières 306 et 307.

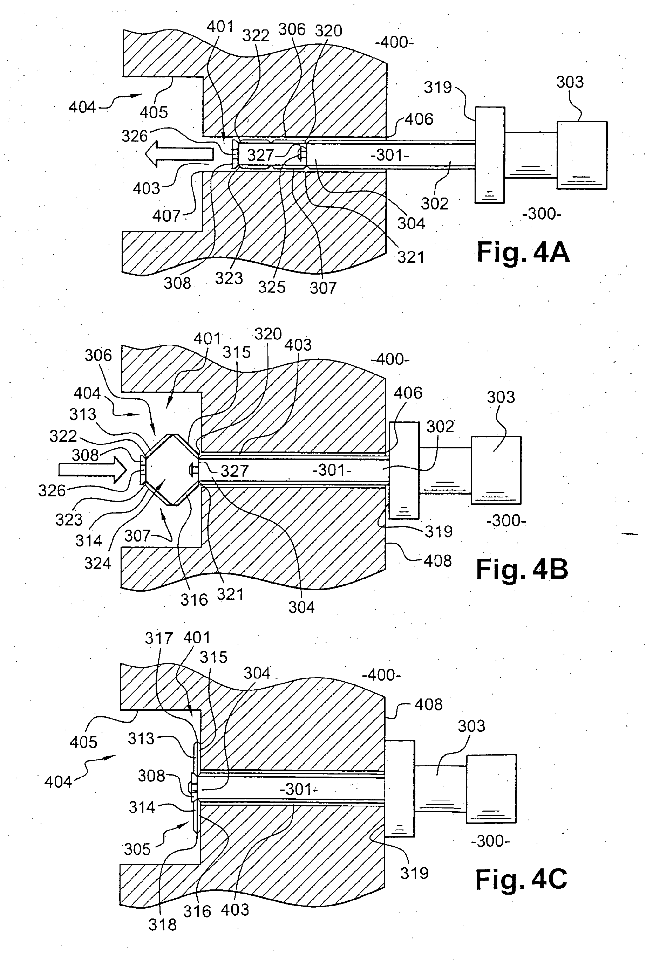

Sur la figure 4, on peut voir un montage en trois étapes (4A, 4B et 4C) de la cartouche 300 de l'invention dans un logement 401 ménagé dans un réservoir 400 de liquide hydraulique. Le logement 401 comporte deux parties, respectivement 403 et 404. Le logement 401 est partiellement traversant. C'est à dire que le logement 401 traverse le réservoir 400, sans toute fois le traverser de part en part. Le logement 401 comporte une première partie 403 cylindrique. Dans un autre exemple de réalisation de l'invention, la première partie 403 du logement 401 peut avoir une section carrée, ou rectangulaire. La première partie cylindrique 403 débouche par une extrémité externe 406 vers l'extérieur du réservoir 400, et par une extrémité interne 407 dans une deuxième partie 404 du logement 401. La deuxième partie 404 est formée par une cavité 404 délimitée par une paroi 405 du réservoir 400.

Au moment du montage de la cartouche 300 dans la première partie 403 du logement 401 (figure 4A), les moyens pliables 306 et 307 sont en position allongée. C'est-à-dire que les charnières 306 et 307 éloignent de toute leur longueur le socle 308 de la deuxième extrémité 304 de la jupe 301 portant lesdites charnières 306 et 307.

On introduit le socle 308, les charnières 306 et 307 et la jupe 301 dans la partie cylindrique 403 du logement 401 par l'extrémité externe 406 du logement cylindrique 403.

Lorsque l'extrémité 304 de la jupe 301 portant les charnières 306 et 307 débouche dans la cavité 404 (figure 4B), une face 319 du boîtier 303, solidaire de la première extrémité 302 de la jupe 301, est en butée contre une paroi externe 408 du réservoir 400, bordant l'extrémité externe 406 de la partie cylindrique 403 du logement 401: On remonte alors le socle 308 en direction de la deuxième extrémité 304 de la jupe 301. En remontant le socle 308, les charnières 306 et 307 se replient vers l'extérieur.

La partie haute 313 ou 314 d'une charnière 306 ou 307 s'accole sur toute une longueur interne à la partie basse 315 ou 316 de la même charnière 306 ou 307 (figure 4C). La jonction 317 ou 318 se dirige vers l'extérieur par rapport à un périmètre intérieur délimité par les deux charnières 306 et 307. Le socle 308 est solidaire de la deuxième extrémité 304 de la jupe 301. Les charnières 306 et 307 sont repliées formant alors la deuxième butée 305 de la cartouche 300.

Ainsi, la cartouche 300, est logée dans le logement 401 ménagé dans le corps du réservoir 400, et est maintenue dans ledit logement 401 par ses deux butées 303 et 305.

Dans un exemple particulier de réalisation, on peut réaliser la deuxième butée 305 de manière à ce qu'une extrémité haute 320 ou 321 de chacune des charnières 306 et 307 soit biseautée, de manière à pouvoir épouser un contour externe de la deuxième extrémité 304 de la jupe 301. De même, une extrémité basse 322 ou 323 de chacune des charnières 306 et 307 peut être biseautée de manière à pouvoir épouser un contour du socle 308.

La jupe 301 et la deuxième butée 305 peuvent être par exemple réalisées en polypropylène rigide. La butée 305 est alors une butée rigide. Plus généralement, on utilise, pour réaliser la jupe 301 et la deuxième butée 305 un composé tel que lorsque le socle 308 s'éloigne, de manière non voulue, de la deuxième extrémité 304 de la jupe 301, les charnières 306 et 307 restent au moins partiellement repliées. Ainsi, la cartouche 300 est toujours maintenue dans le logement 401 duquel elle ne peut accidentellement se retirer.

Il est possible de prévoir, dans un exemple de réalisation particulier de l'invention un moyen de fixation 324 du socle 308 sur la jupe 301. Par exemple, le moyen de fixation 324 comporte une protubérance 325 située sur une face externe 327 de la deuxième extrémité 304 de la jupe 301, et un orifice 326 ménagé sur le socle 308 (figure 4). L'orifice 326 peut être circulaire. La protubérance 325 a par exemple un profil extérieur rond. Par profil on entend, le profil de la protubérance dans un plan qui contient la direction de la protubérance. La protubérance 325 ronde peut s'encliqueter dans l'orifice 326 lorsque les charnières 306 et 307 sont complètement repliées. La protubérance 325 est telle que l'encliquetage est aisé mais le démontage difficile.

Il est également possible de prévoir une protubérance 325 ayant un profil extérieur angulaire. L'encliquetage de la protubérance 325, dont le profil extérieur est angulaire, dans l'orifice 326 ménagé dans le socle 308 est aisé, tandis que le démontage par rapport au socle 308, lui, est impossible.

Dans un exemple de réalisation particulier de l'invention, on peut prévoir des moyens de réglage, sur les moyens de fixation, d'une distance entre les deux butées 303 et 305. Par exemple, on ménage sur la protubérance 325 ou dans l'orifice 326 plusieurs crans d'encliquetage. Il est ainsi possible d'ajuster la distance séparant les deux butées 303 et 305 selon une longueur du logement 401, pour rattraper les tolérances de fabrication.

Le moyen de fixation 324 du socle 308 sur la jupe 301 permet de maintenir en traction la jupe 301 contre la paroi interne 405 du réservoir 400. Les charnières 306 et 307 tendent à se déplier, ce qui tend à tirer et à appliquer la face 319 du boîtier 303 contre la paroi externe 408 du réservoir 400. La jupe est ainsi emprisonnée entre ses deux butées 303 et 305 dans la première partie 403 du logement 401. Tout déplacement axial de la jupe 301 dans le logement 401 est interdit.

Par ailleurs, il est possible de réaliser le logement 401 de manière à ce que des dimensions internes de la partie cylindrique 403 du logement 401 suivent des dimensions externes de la jupe 301. Ainsi, une paroi interne de la partie cylindrique 403 est en contact serré avec la jupe 301, empêchant tout mouvement radial de la 301-jupe dans le logement 401.

Il est possible, dans d'autres exemples de réalisation de varier le nombre de charnières 306 et 307. Par exemple, on peut réaliser une deuxième butée 305 comportant trois ou quatre charnières.

La cartouche de détection 300 de l'invention peut par exemple comporter un connecteur logé dans le boîtier 303 et un circuit électrique logé dans la jupe 301 (non visibles sur les figures). Lorsqu'un niveau du liquide dans le réservoir 400 atteint un niveau critique, le circuit électrique, comportant par exemple un interrupteur à la lames souples, est fermé, permettant un allumage d'un voyant lumineux sur un tableau de bord du véhicule.

L'invention se rapporte également à un réservoir 400 muni d'une telle cartouche 300 de détection du niveau de liquide.

L'invention se rapporte également à un procédé de montage d'une cartouche 300 dans un logement 401 ménagé dans un réservoir 400.

Selon le procédé de l'invention, on moule une jupe 301 de la cartouche 300 et des moyens pliables 306 et 307. Le moulage est réalisé de manière à ce que les moyens pliables 306 et 307 soient solidaires par une première extrémité 315 ou 316 d'une deuxième extrémité 304 de la jupe 301, et par une deuxième extrémité 313 ou 314 d'un socle 308.

On solidarise une première extrémité 302 de la jupe 301 à un élément 303 formant une butée.

On introduit par sa deuxième extrémité 304 la jupe 301 dans une partie cylindrique 403 du logement 401.

On amène l'élément formant butée 303 en butée contre une paroi 408 du réservoir 400, la deuxième extrémité 304 de la jupe 301 débouchant dans une partie en forme de cavité 404 du logement 401.

On remonte le socle 308 en direction de la deuxième extrémité 304 de la jupe 301, en repliant les moyens pliables 306 et 307 vers l'extérieur. Les moyens pliables 306 et 307 forment alors une butée 305 contre une paroi 405 du réservoir 400 bordant une extrémité interne 407 de la partie cylindrique 403 du logement 401.

Dans l'exemple représenté sur les figures 4a à 4c, la cavité 404 est débouchante vers l'extérieur du réservoir 400. Ainsi, on peut remonter aisément et manuellement le socle 308 en direction de la jupe 301.

Dans un autre exemple, pour remonter le socle 308 en direction de la jupe 301, on peut utiliser une ficelle. On solidarise une première extrémité de la ficelle au socle 308 avant d'introduire la cartouche 300 dans le logement 401. Une deuxième extrémité de la ficelle est libre. Une longueur de la ficelle est supérieure à une longueur totale du logement 401, de manière à ce que la deuxième extrémité de la ficelle soit située hors du logement 401, côté première butée 303, lorsque la cartouche 300 est disposée dans le logement 401. Une fois la cartouche 300 positionnée dans le logement 401, on tire la deuxième extrémité de la ficelle de manière à tirer le socle vers la jupe 301, tout en maintenant la cartouche 300 dans son logement 401, par exemple en appliquant la première butée 303 contre la paroi externe 408 du réservoir 400. Les charnières 306 et 307 sont ainsi repliées, la cartouche 300 ne peut plus se retirer du logement 401.

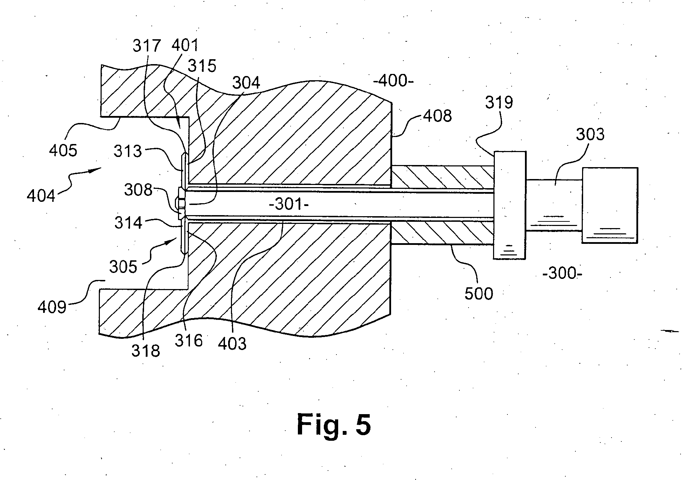

Il est également possible, comme cela est représenté sur la figure 5, de réaliser la jupe 301 de manière à ce qu'une longueur de la jupe 301 soit sensiblement égale à une longueur totale du logement 401. Par longueur totale du logement 401 on entend longueur depuis l'extrémité externe 406 de la partie cylindrique 403 du logement 401 jusqu'à un fond 409 de la cavité 404. Par fond 409 de la cavité 404, on entend extrémité opposée à l'extrémité bordant l'extrémité interne 407 de la partie cylindrique 403 du logement 401. Ainsi, lorsque la jupe 301 est entièrement introduite dans le logement 401, le socle 308 est situé à l'endroit du fond 409 de la cavité 404. On replie au moins partiellement les charnières 406 et 407. On tire alors la cartouche 300, à l'endroit de la première butée 303, dans une direction opposée à la direction d'introduction de la cartouche 300 dans le logement 401, jusqu'à emmener les charnières 306 et 307, repliées, et le socle 308 en butée contre la paroi interne 405 de la cavité 404 bordant l'extrémité interne 407 de la partie cylindrique 403 du logement 401. On comble alors un espace entre la face 319 de la butée 303 solidaire de la jupe 301 et la paroi externe 408 du réservoir 400 avec une cale 500. La butée 303 vient donc en butée contre la cale 500. Selon l'invention, on prévoit d'encliqueter une protubérance 325 située sur une face 327 de la deuxième extrémité 304 de la jupe 301, dans un orifice 326 ménagé sur le socle 308.

La cartouche 300 de l'invention est facilement montable dans le logement 401 ménagé dans le réservoir 400. Le montage n'endommage pas la butée 305 destinée à être logée dans la cavité 404. En effet, lors de leur passage dans la partie cylindrique 403 du logement 401, les moyens pliables 306 et 307 sont dépliés. Les moyens pliables 306 et 307 sont donc dans une continuité de la jupe 301, et n'offrent aucune surface pouvant faire obstacle à l'introduction et au coulissement de la jupe 301 dans la partie cylindrique 403. Pour démonter la cartouche 300, on déplie préalablement les moyens pliables 306 et 307, afin qu'un retrait de la jupe 301 se fasse sans accroche. Les moyens pliables 306 et 307 ne sont donc pas endommagés lors du montage et/ou du démontage.

Le maintien de la jupe 301 entre les deux butées 303 et 305 dans le logement 401 permet d'empêcher tout débattement axial ou radial de la jupe 301 dans ledit logement 401. On augmente ainsi une précision de la détection du niveau de liquide dans le réservoir 400 par rapport aux cartouches de l'état de la technique pour lesquelles un débattement axial de la jupe dans le logement ne pouvait être éliminé.

## Revendications

1. Cartouche (300) de détection de niveau de liquide dans un réservoir (400) hydraulique, la cartouche étant apte à être logée dans un logement (401) partiellement traversant ménagé dans le réservoir, le logement comprenant deux parties, une première partie (403) de réception de la cartouche débouchant dans une extrémité externe (406) vers l'extérieur du réservoir et par une extrémité interne (407) dans une deuxième partie (404) du logement, la deuxième partie du logement formant une cavité (404), la cartouche comportant une jupe (301) munie d'une première butée (303) à une première extrémité (302), et d'une deuxième butée (305) à une deuxième extrémité (304), la jupe étant maintenue dans le logement cylindrique au moyen des deux butées,
**caractérisée en ce que**
- la deuxième extrémité (304) de la jupe est munie de moyens pliables (306, 307) formant la deuxième butée,
- les moyens pliables sont munis d'au moins deux charnières (306 et 307), une extrémité haute (331 et 312) de chacune des charnières étant solidaire de la deuxième extrémité (304) de la jupe, une extrémité basse (309, 310) de chacune des charnières étant solidaire d'un socle (308), chaque charnière étant munie de deux partie (313, 315 et 314, 316), une jonction (317, 318) entre les deux parties étant arrangée pour s'écarter vers l'extérieur lors d'une remontée du socle vers l'extrémité de la jupe et elle est munie d'un moyen de fixation (325, 326) du socle sur la jupe ayant une protubérance (325) sur la face de l'extrémité de la jupe dirigée vers le socle, la protubérance étant arrangée pour s'encliqueter dans un orifice (326) ménagé sur le socle.

2. Cartouche selon la revendication 1,
**caractérisée en ce que**
l'extrémité haute de chaque charnière est biseautée de manière à suivre un contour de l'extrémité de la jupe lorsque la charnière est pliée.

3. Cartouche selon la revendication 1 à 2,
**caractérisée en ce que**
l'extrémité haute de chaque charnière est biseautée de manière à suivre un contour du socle lorsque la charnière est pliée.

4. Cartouche selon la revendication 1,
**caractérisée en ce que**
le profil extérieur de la protubérance est rond, l'encliquetage étant réversible ou le profil extérieur de la protubérance est angulaire, l'encliquetage étant irréversible.

5. Cartouche selon la revendication 1,
**caractérisée en ce que**
les moyens de fixation du socle sur la jupe sont munis de moyens de réglage d'une distance entre la première butée et la deuxième butée.

6. Cartouche selon l'une quelconque des revendications 1 à 5,
**caractérisée en ce que**
la deuxième butée de la jupe, dirigée vers la cavité, est formée par les moyens pliables, et **en ce que** la première butée de la jupe, dirigée vers l'extérieur du réservoir, est formée par un boîtier (303).

7. Cartouche selon la revendication 6,
**caractérisée en ce qu'**
elle est munie d'un connecteur logé dans le boîtier et d'un circuit électrique logé dans la jupe.

8. Réservoir (400) de liquide hydraulique,
**caractérisé en ce qu'**
il est muni d'une cartouche (300) selon l'une quelconque des revendications 1 à 7.

9. Procédé de montage d'une cartouche (300) selon l'une quelconqe des revendications 1 à 7 dans un logement (401) partiellement traversant ménagé dans un réservoir (400),
**caractérisé en ce qu'**
il comprend les étapes consistant à :
- moduler une jupe (301) de la cartouche et des moyens pliables (306, 307), les moyens pliables étant solidaires par une extrémité haute (316, 317) à une deuxième extrémité(304) de la jupe, une extrémité basse (309, 310) des moyens pliables étant solidaires d'un socle (308),
- solidariser une première extrémité (302) de la jupe à un élément (303) formant une butée,
- introduire par sa deuxième extrémité la jupe dans une partie cylindrique (403) du logement,
- amener l'élément formant une butée (303) contre une paroi externe (408) du réservoir, la deuxième extrémité de la jupe débouchant dans une partie en forme de cavité (404) du logement,
- remonter le socle en direction de la deuxième extrémité de la jupe, en repliant les moyens pliables vers l'extérieur, les moyens pliables formant une butée (305) contre une paroi (405) du réservoir bordant une extrémité interne (407) de la partie cylindrique du logement,
- encliqueter une protubérance (325) située sur une face (327) de la deuxième extrémité de la jupe, dans un orifice (326) ménagé sur le socle.

## Patentansprüche

1. Patrone (300) zur Erfassung des Flüssigkeitsstands in einem Hydraulikbehälter (400), wobei die Patrone in einer im Behälter ausgebildeten, teilweise durchgängigen Aufnahme (401) untergebracht werden kann, wobei die Aufnahme zwei Teile enthält, einen ersten Teil (403) zum Empfang der Patrone, der in einem äußeren Ende (406) zur Außenseite des Behälters und durch ein inneres Ende (407) in einen zweiten Teil (404) der Aufnahme mündet, wobei der zweite Teil der Aufnahme einen Hohlraum (404) bildet, wobei die Patrone eine Schürze (301) aufweist, die mit einem ersten Anschlag (303) an einem ersten Ende (302) und mit einem zweiten Anschlag (305) an einem zweiten Ende (304) versehen ist, wobei die Schürze mittels der zwei Anschläge in der zylindrischen Aufnahme gehalten wird,
**dadurch gekennzeichnet, dass**
- das zweite Ende (304) der Schürze mit faltbaren Einrichtungen (306, 307) versehen ist, die den zweiten Anschlag bilden,
- die faltbaren Einrichtungen mit mindestens zwei Scharnieren (306 und 307) versehen sind, wobei ein oberes Ende (331 und 312) jedes der Scharniere fest mit dem zweiten Ende (304) der Schürze verbunden ist, ein unteres Ende (309, 310) jedes der Scharniere fest mit einem Sockel (308) verbunden ist, wobei jedes Scharnier mit zwei Teilen (313, 315 und 314, 316) versehen ist, wobei eine Verbindung (317, 318) zwischen den zwei Teilen angeordnet ist, um sich bei einem Hochsteigen des Sockels zum Ende der Schürze zu entfernen, und sie ist mit einer Befestigungseinrichtung (325, 326) des Sockels an der Schürze versehen, die einen Vorsprung (325) auf der zum Sockel gerichteten Seite des Endes der Schürze hat, wobei der Vorsprung angeordnet ist, um in eine auf dem Sockel ausgesparte Öffnung (326) einzurasten.

2. Patrone nach Anspruch 1, **dadurch gekennzeichnet, dass** das obere Ende jedes Scharniers abgeschrägt ist, um einer Kontur des Endes der Schürze zu folgen, wenn das Scharnier gefaltet wird.

3. Patrone nach Anspruch 1 bis 2, **dadurch gekennzeichnet, dass** das obere Ende jedes Scharniers abgeschrägt ist, um einer Kontur des Sockels zu folgen, wenn das Scharnier gefaltet wird.

4. Patrone nach Anspruch 1, **dadurch gekennzeichnet, dass** das Außenprofil des Vorsprungs rund ist, wobei das Einrasten umkehrbar ist, oder das Außenprofil des Vorsprungs eckig ist, wobei das Einrasten unumkehrbar ist.

5. Patrone nach Anspruch 1, **dadurch gekennzeichnet, dass** die Befestigungseinrichtungen des Sockels an der Schürze mit Einstelleinrichtungen eines Abstands zwischen dem ersten Anschlag und dem zweiten Anschlag versehen sind.

6. Patrone nach einem der Ansprüche 1 bis 5, **dadurch gekennzeichnet, dass** der zweite Anschlag der Schürze, der zum Hohlraum gerichtet ist, von den faltbaren Einrichtungen gebildet wird, und dass der erste Anschlag der Schürze, der nach außerhalb des Behälters gerichtet ist, von einem Gehäuse (303) gebildet wird.

7. Patrone nach Anspruch 6, **dadurch gekennzeichnet, dass** sie mit einem im Gehäuse untergebrachten Verbinder und mit einer in der Schürze untergebrachten elektrischen Schaltung versehen ist.

8. Behälter (400) einer Hydraulikflüssigkeit, **dadurch gekennzeichnet, dass** er mit einer Patrone (300) nach einem der Ansprüche 1 bis 7 versehen ist.

9. Verfahren zur Montage einer Patrone (300) nach einem der Ansprüche 1 bis 7 in eine teilweise durchgängige Aufnahme (401), die in einem Behälter (400) ausgespart ist, **dadurch gekennzeichnet, dass** es die Schritte enthält, die darin bestehen:
- eine Schürze (301) der Patrone und faltbare Einrichtungen (306, 307) zu modulieren, wobei die faltbaren Einrichtungen über ein oberes Ende (316, 317) fest mit einem zweiten Ende (304) der Schürze verbunden sind, wobei ein unteres Ende (309, 310) der faltbaren Einrichtungen fest mit einem Sockel (308) verbunden ist,
- ein erstes Ende (302) der Schürze fest mit einem einen Anschlag bildenden Element (303) zu verbinden,
- die Schürze über ihr zweites Ende in einen zylindrischen Teil (403) der Aufnahme einzuführen,
- das einen Anschlag (303) bildende Element gegen eine Außenwand (408) des Behälters zu bringen, wobei das zweite Ende der Schürze in einem Teil in Form eines Hohlraums (404) der Aufnahme mündet,
- den Sockel in Richtung des zweiten Endes der Schürze hochzuschieben, indem die faltbaren Einrichtungen nach außen gefaltet werden, wobei die faltbaren Einrichtungen einen Anschlag (305) gegen eine Wand (405) des Behälters bilden, der ein inneres Ende (407) des zylindrischen Teils der Aufnahme umrandet,
- einen auf einer Seite (327) des zweiten Endes der Schürze befindlichen Vorsprung (325) in eine auf dem Sockel ausgesparte Öffnung (326) einzurasten.

## Claims

1. Cartridge (300) for detecting liquid level in a hydraulic tank (400), the cartridge being able to be housed in a partially through housing (401) formed in the tank, the housing comprising two parts, a first part (403) for receiving the cartridge emerging in an outer end (406) towards the outside of the tank and via an inner end (407) into a second part (404) of the housing, the second part of the housing forming a cavity (404), the cartridge comprising a skirt (301) provided with a first abutment (303) at a first end (302), and a second abutment (305) at a second end (304), the skirt being held in the cylindrical housing by means of the two abutments,
**characterized in that**
- the second end (304) of the skirt is provided with flexible means (306, 307) forming the second abutment,
- the flexible means are provided with at least two hinges (306 and 307), a top end (331 and 312) of each of the hinges being secured to the second end (304) of the skirt, a bottom end (309, 310) of each of the hinges being secured to a base (308), each hinge being provided with two parts (313, 315 and 314, 316), a join (317, 318) between the two parts being arranged to separate outwards when the base is raised towards the end of the skirt and it is provided with a means (325, 326) for fixing the base on the skirt having a protuberance (325) on the face of the end of the skirt directed towards the base, the protuberance being arranged to be snap-fitted into an orifice (326) formed on the base.

2. Cartridge according to Claim 1,
**characterized in that**
the top end of each hinge is bevelled so as to follow an outline of the end of the skirt when the hinge is folded.

3. Cartridge according to Claim 1 to 2,
**characterized in that**
the top end of each hinge is bevelled so as to follow an outline of the base when the hinge is folded.

4. Cartridge according to Claim 1,
**characterized in that**
the outer profile of the protuberance is round, the snap-fitting being reversible or the outer profile of the protuberance is angular, the snap-fitting being irreversible.

5. Cartridge according to Claim 1,
**characterized in that**
the means for fixing the base on the skirt are provided with means for setting a distance between the first abutment and the second abutment.

6. Cartridge according to any one of Claims 1 to 5,
**characterized in that**
the second abutment of the skirt, directed towards the cavity, is formed by the flexible means, and **in that** the first abutment of the skirt, directed towards the outside of the tank, is formed by a casing (303).

7. Cartridge according to Claim 6,
**characterized in that**
it is provided with a connector housed in the casing and an electrical circuit housed in the skirt.

8. Tank (400) of hydraulic liquid,
**characterized in that**
it is provided with a cartridge (300) according to any one of Claims 1 to 7.

9. Method for mounting a cartridge (300) according to any one of Claims 1 to 7 in a partially through housing (401) formed in a tank (400),
**characterized in that**
it comprises the steps consisting in:
- modulating a skirt (301) of the cartridge and flexible means (306, 307), the flexible means being secured by a top end (316, 317) to a second end (304) of the skirt, a bottom end (309, 310) of the flexible means being secured to a base (308),
- securing a first end (302) of the skirt to an element (303) forming an abutment,
- introducing, by its second end, the skirt into a cylindrical part (403) of the housing,
- bringing the element forming an abutment (303) against an outer wall (408) of the tank, the second end of the skirt emerging into a part in the form of a cavity (404) of the housing,
- raising the base towards the second end of the skirt, by folding the flexible means outwards, the flexible means forming an abutment (305) against a wall (405) of the tank bordering an inner end (407) of the cylindrical part of the housing,
- snap-fitting a protuberance (325) situated on a face (327) of the second end of the skirt into an orifice (326) formed on the base.
